# EUROPEAN PATENT SPECIFICATION

(11) **EP 1 854 859 B1**
(45) Date of publication and mention of the grant of the patent: **08.04.2015**
(21) Application number: 05743907.7
(22) Date of filing: 27.05.2005
(51) Int. Cl.: C22C 9/00, C22C 11/00, C22C 12/00, C09K 5/14, F25B 9/14

(54) **COLD STORAGE MATERIAL, COLD STORAGE DEVICE AND VERY-LOW-TEMPERATURE COLD STORAGE REFRIGERATOR**
KÜHLMATERIAL, KÜHLVORRICHTUNG UND TIEFSTTEMPERATURKÜHLGERÄT
MATIERE DE STOCKAGE FRIGORIFIQUE, APPAREIL DE STOCKAGE FRIGORIFIQUE ET REFRIGERATEUR DE STOCKAGE FRIGORIFIQUE A TEMPERATURE TRES BASSE

(30) Priority: 03.03.2005 JP 2005059648
(43) Date of publication of application: 14.11.2007
(73) Proprietor: SUMITOMO HEAVY INDUSTRIES, LTD., Tokyo 141-6025 (JP)
(72) Inventor: SATOH, Toshimi, Yokosuka-shi, Kanagawa 2370063 (JP)
(74) Representative: Wagner & Geyer
(86) International application number: PCT/JP2005/009775
(87) International publication number: WO 2006/092871

(56) References cited:
- EP-A1- 0 947 785
- JP-A- 7 234 028
- JP-A- 2002 249 763
- JP-A- 2004 099 822
- JP-A- 2004 189 906
- JP-A- 2004 225 920
- JP-A- 2005 075 963
- US-A1- 2002 026 799

## Description

### TECHNICAL FIELD

The present invention relates to a regenerator material, a regenerator, and a regenerative cryocooler. Inparticular, the present invention relates to a regenerator material having enhanced cooling capacity using a novel regenerator material suitably used for a GM (GiffordMcMahon) cycle cryocooler, a Stirling cycle cryocooler, a pulse tube cryocooler, a Vuilleumier cycle cryocooler, a Solvay cycle cryocooler or a cooling system or the like using these cryocoolers as a precooling stage, a regenerator, a regenerative cryocooler, a cooling system using the cryocooler, a superconducting magnet, a magnetic resonance imaging (MRI) apparatus, a Cryopump, a cryogenic gas purifying apparatus and a superconducting device cooling apparatus or the like.

### BACKGROUND ART

Currently, a regenerative cryocooler is one type of cryocooler in wide use in a cryogenic range. This is provided with a regenerator referred to as a heat exchanger. This regenerator includes a regenerative heat exchange material in a container.

A material having large specific heat at the object temperature as the regenerator material hasbeenused. Since the cryocooler realizes a large temperature range from room temperature to 4K, it is necessary to select a material having as large a specific heat as possible in its entire range. The temperature-dependence of specific heat of waterial is greatly different each other, and only one material cannot cover the entire temperature range. Therefore, the optimum material is combined and used according to temperature. Typically, a copper mesh screen and/or stainless steel mesh screen are used from room temperature to about 50K, and spherical lead is used at a temperature of 50K or less. Lead has specific heat higher than that of other material and a certain level of structural strength in a low temperature range of 50K or less and is at low cost. Thereby, lead has been widely used (for example, see Japanese Published Unexamined Patent Application No. 3-99162).

However, Europe has examined the enforcement of directives for prohibiting the use of lead in electric appliances from 2006 due to the impact of lead on environment. With the use of lead for soldering of electric appliances, in terms of post-disposal, measures against polluting the environment as a result of leaving electric appliances outdoors are strengthening.

The details of regulatory measures eliminate lead from almost all electric appliances except for some products used by the military and in aerospace. Medical equipment is also included in the regulatory-targeted articles. At present, it is not apparent whether lead used in cryocoolers of an MRI apparatus will become a regulatory target. However, when lead is prohibited, the impact will be large, and it will be necessary to secure some measures.

Japanese Published Unexamined Patent Application No. 2004-225920 discloses an alloy of indium, bismuth and a third material as the regenerator material to replace lead. Indium has specific heat after lead at a temperature of 50Kor less, which is the idea believed harnessing the properties of indium.

However, since indium is a very soft metal, indium cannot be used as it is as a regenerator material. The hardness of the regenerator material is enhanced to hardness required for the regenerator material by producing an alloy of indium and bismuth or another metal. However, it is inadequate to use an alloy as the regenerator material. The price of indium is about 3 times that of lead, and it is too expensive to use indium as the cold accumulating material.

With regard to the available prior art, attention is drawn to US 2002/026799 A1, EP 0 947 785 A1, JP 2004 099822 A, JP 2002 249 763 A, JP 2004 189906 A, JP 2004 225920 A, and JP H07-234028 A.

### DISCLOSURE OF THE INVENTION

The present invention has been made for solving the above conventional problems. It is an object of the present invention to provide a regenerator material which is low in toxicity, easily turned into a spherical shape, having sufficient mechanical strength for use, low cost, and having a superior thermal property when used for a cryocooler.

The problems are solved by a regenerator material including a granular body made of bismuth or an alloy of bismuth and antimony, wherein a rate of the granular body having a grain size of 0.14mm to 1.6mm is 70% by weight or more with respect to the entire granular body, and a rate of the granular body in which a ratio of a major axis to a minor axis is 5 or less is 70% by weight or more with respect to the entire granular body.

A surface roughness of the granular body in terms of maximum height Rₘₐₓ may be 100 µm or less.

At least a part of a structure of the granular body may contain an amorphous phase.

A rate of particles having a minute defect having a length of 10 µm or more to whole particles in the granular body may be 30% by weight or less.

A surface of the granular body may not have discoloration caused by oxidization.

The granular bodymade of bismuth or an alloy of bismuth and antimony may be sintered and processed into a block form, a pellet form or a plate form.

The present invention provides a regenerator filled with the regenerator material.

The present invention provides a regenerator having a hybrid structure of two or more layers including the regenerator material and a magnetic regenerator material.

The magnetic regenerator material may be HoCu₂; HoCu₂ and Gd₂O₂S, or GAP (GdAlO₃); Er₃Ni or Er₃Co; or Er₃Ni or Er₃Co and Gd₂O₂S or GAP (GdAlO₃).

The present invention provides a regenerative cryocooler including the regenerator.

The regenerator maybe used for a lowest temperature cooling stage.

Alternatively, the regenerator may be used for a middle cooling stage, and another magnetic material having a large specific heat at 4K or lower may be used for a last cooling stage regenerator.

The present invention provides a cooling system including: a precooling stage using the cryocooler; and at least one other cooling means.

Also, the present invention provides a superconducting magnet, MRI apparatus, cryopump, cryogenic gas purifying apparatus or superconducting device cooling apparatus including the cryocooler or cooling system.

Since the present invention uses bismuth or an alloy of bismuth and antimony as a regenerative material, the present invention gives a comparatively low load to the environment. The conditions required for the regenerative material are satisfied, such as easy spheroidizing, sufficient mechanical strength for use, low cost, and excellent thermal property when used for the cryocooler.

### BRIEF DESCRIPTION OF THE DRAWINGS

Fig. 1 is an explanatory view schematically showing a cryogenic cryocooler of a first embodiment according to the present invention;
Fig. 2 is a diagram showing an example of the relationship between bismuth size and cooling capacity at 4.2K;
Fig. 3 is a diagram showing the volumetric specific heat of a material constituting a regenerator material;
Fig. 4 is a sectional view showing a major part of a second regenerator for comparing and showing the structures of (A) a conventional lead regenerator and (B) bismuth regenerator according to the present invention;
Fig. 5 is a diagram showing rotation number-dependent properties of the lowest temperature during no load in Example 1 of the present invention;
Fig. 6 is a diagram showing the rotation number-dependent properties of second stage cooling capacity during first stage no load in Example 1 of the present invention;
Fig. 7 is a diagram of cooling capacity at 60 rpm in Example 1 of the present invention;
Fig. 8 is a diagram showing first stage temperature-dependent properties of second stage cooling capacity at 4.2K when applying load to first stage in Example 1 of the present invention;
Fig. 9 is a diagram showing the first stage temperature-dependent properties of second stage cooling capacity at 4.2K using the condition of bismuth as a parameter in Example 1 of the present invention;
Fig. 10 is a diagram showing bismuth grain size-dependent properties of second stage cooling capacity at 4.2K in Example 1 of the present invention;
Fig. 11 is a diagram showing bismuth grain size-dependent properties of first stage cooling capacity at 4.2K in Example 1 of the present invention;
Fig. 12 is a sectional view showing the structure of the major part of a second stage regenerator compared in Example 2;
Fig. 13 is a diagram comparing and showing cooling capacity due to the difference in the structures of regenerators in Example 2;
Fig. 14 is a diagram comparing and showing second stage cooling capacity in Example 2;
Fig. 15 is a diagram comparing and showing first stage cooling capacity in Example 2; and
Fig. 16 is a schematic sectional view showing the whole structure of a second embodiment in which a cryocooler of the present invention is applied to an MRI apparatus.

### BEST MODE FOR CARRYING OUT THE INVENTION

Hereinafter, with reference to the drawings, embodiments of the present invention will be described in detail.

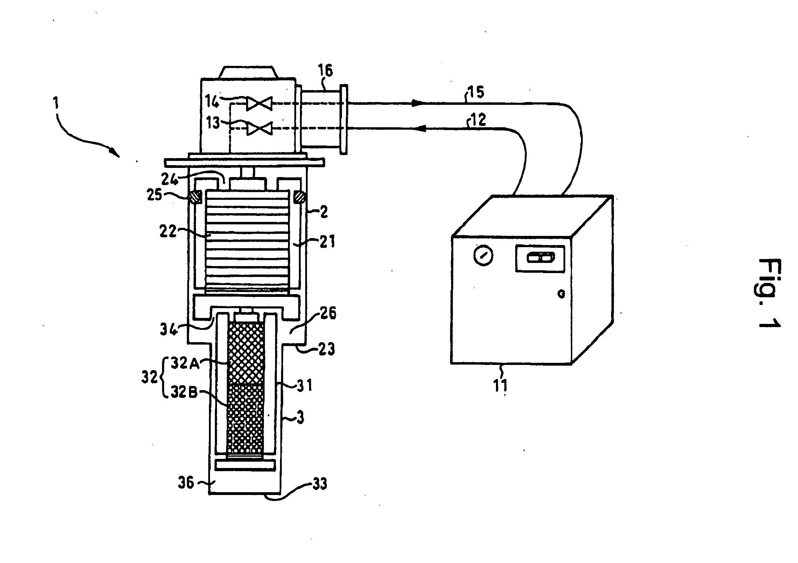

Fig. 1 schematically shows an outline of a regenerator type cryogenic cryocooler of a first embodiment according to the present invention. With this cryocooler, the present invention is applied to a two stage type GM cryocooler.

As shown in the figure, to a cryocooler 1 of this embodiment, high pressure refrigerant gas is supplied through a high pressure gas piping 12 and a high pressure valve 13 from a compressor 11. The refrigerant gas is collected as low pressure gas through a low pressure valve 14 and a low pressure gas piping 15. In this cryocooler 1, a first stage cold accumulator 21 and a second stage cold accumulator 31 are respectively accommodated in a first stage cylinder 2 and a second stage cylinder 3. Both cold accumulators 21 and 31, which are driven by a drive motor 16, are vertically reciprocated to cool the lower end side of the respective coolers.

The first stage cold accumulator 21 and the second stage cold accumulator 31 are respectively filled with a first stage regenerator material 22 and a second stage regenerator material 32. The first stage regenerator material 22 is formed by laminating, for example, 970 layers of copper wire netting of mesh 150.

As shown in the figure, a second stage cold accumulator (displacer) 31 has a laminated structure of upper and lower layers where the second stage regenerator material 32 is divided at a position where the volume ratio is almost the same. A low temperature side regenerator material 32B of the second layer is filled with granular HoCu₂ shot. A high temperature side regenerator material 32A of the first layer is filled with Bi (bismuth) prepared by crushing bulk or spherical Bi.

Acoolingpart of the cryocooler 1 of this embodiment is constituted by a first stage cooler 21 and second stage cooler 31 which are respectively accommodated in the first stage cylinder 2 and second stage cylinder 3 integrally and continuously formed. A first cooling stage 23 (low temperature end) of a first stage cylinder is cooled to about 40K. A second stage cooling stage 33 of the second stage cylinder is cooled to, for example, 7K or less. Electric heaters (not shown) are respectively attached to the first cooling stage 23 and the second cooling stage 33. Heat load can be applied by the electric input to measure the cooling capacity of each of the stages.

In Fig. 1, reference numeral 24 designates a gas passage of the first stage regenerator 21; reference numeral 25, a seal for airproofing between the first stage regenerator 21 and the first stage cylinder 2; reference numeral 26, a first stage expansion space; reference numeral 34, a gas passage of second stage regenerator; and reference numeral 36, a second stage expansion space. The stroke of the displacer is 25mm. However, a seal between second stage regenerator 31 and the second stage cylinder 3 is omitted.

In this Example, the purity of the granular bismuth filled as the regenerator material 32A of the high temperature side can be set to, for example, 99.99%. The grain size thereof is 0.14mm to 1.6mm, preferably 0.15mm to 1.4mm, and more preferably 0.22mm to 1.3mm.

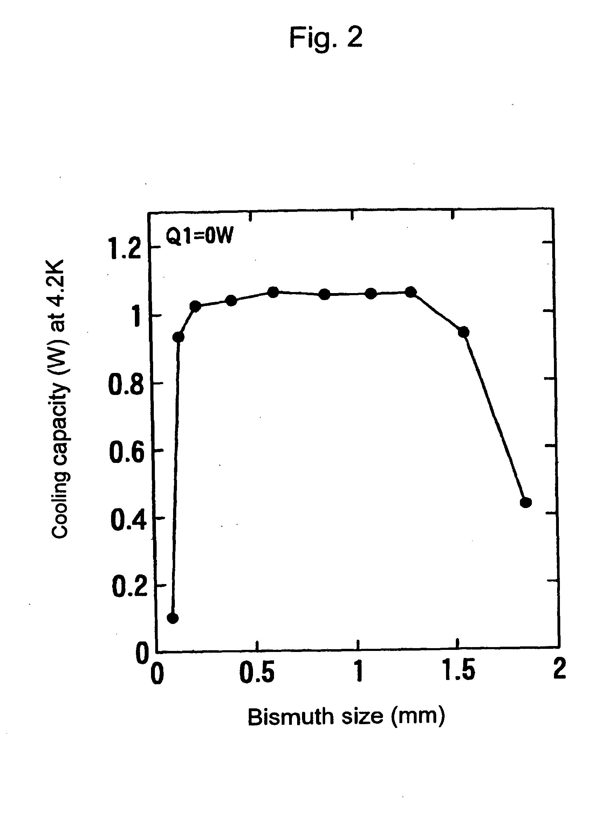

Fig. 2 shows an example of the relationship between bismuth size (grain size) and cooling capacity at 4.2K.

The grain size of less than 0.14mm causes excessively high density of bismuthwhen the regenerator is filled with bismuth to rapidly increase the flow resistance of helium gas as a cooling medium. When the grain size exceeds 1.6mm, the heat exchange efficiency between the granular body and the cooling medium may be remarkably reduced.

The ratio (aspect ratio) of the largest diameter to the lowest diameter of the regenerator material made of bismuth of this embodiment is 5 or less in a three-dimensional optional direction, preferably 3 or less, more preferably 2 or less. Still more preferably, the shape of the regenerator material is preferably brought close to sphericity as much as possible. Since the aspect ratio exceeding 5 causes mechanical modification destruction easily and difficult high density filling, the cooling efficiency is reduced.

In the experiment in which a 4.2K cryocooler of the cooling capacity 1W of the embodiment to be described below is used, the granular regenerator material made of bismuth is used. Furthermore, the granular regenerator material has a purity of 99.99% or more, a grain size of 0.3mm to 0. 5mm and an aspect ratio of 5 or less. Unless otherwise noted, the operating cycle by amotor 16 is 60 rpm, and the stroke of the displacer is 30mm.

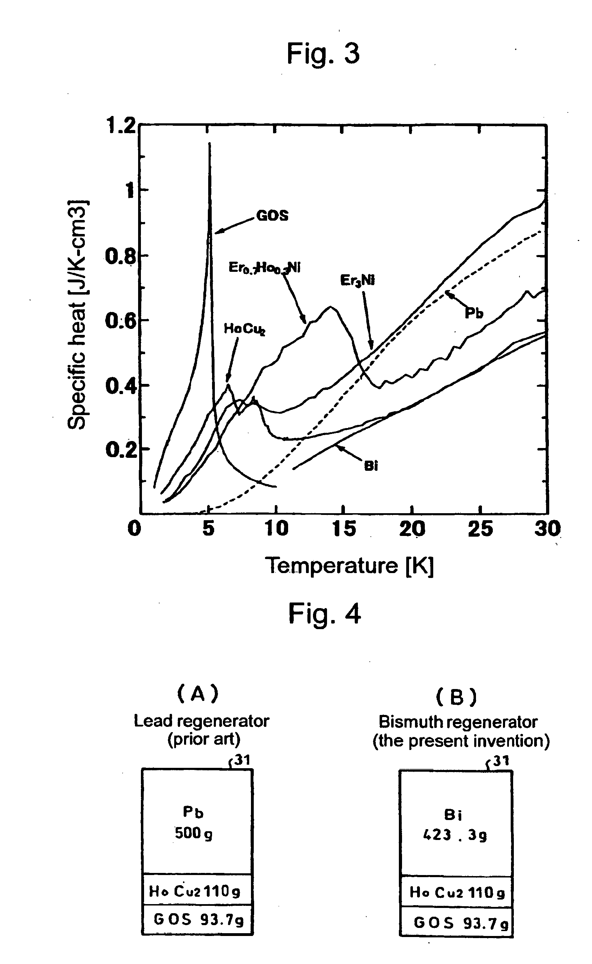

First, Fig. 3 shows the characteristic of volumetric specific heat in the low temperature range of bismuth used as the regenerator material by the present invention in contrast with those of materials used as other regenerator materials. Since bismuth Bi is also used for materials of cosmetics, bismuth Bi is considered to have high safety and no worry of environmental pollution. In addition, bismuth is low cost. Although the regenerator material must have a large volumetric specific heat in the target cryogenic range generally, the volumetric specific heat of bismuth is less than that of lead Pb in only Fig. 3. However, in the range of 5K or more, bismuth has a feature which the volumetric specific heat of bismuth mostly corresponds to that of HoCu₂ which is the magnetic regenerator material. In Fig. 3, Gd₂O₂S is abbreviated as GOS.

### [Example 1]

Table 1 shows the hardness measurement results of the regenerator material evaluated in Example 1.

**[Table 1]**

| Material name | HoCu₂ | Lead | Bismuth ball | |
|---|---|---|---|---|
| | | | A lot | B lot |
| Vickers hardness | 327 | 11.8 | 12.2, 11.9 | 11.3, 11.6 |

It may be said that the Vickers hardness of a bismuth ball is equivalent to that of lead. The hardness of B lot having a black surface is lower than that of A lot having a gold surface, which may be influenced by surface oxidization. When the compressive strengths were measured referring to the strength, the modification of bismuth caused by compression was less than that of lead, and cracking of the material was not observed. This showed that bismuth had the same strength as that of lead.

Next, the second stage regenerator 31 was filled with lead and bismuth, and the cooling capacities of lead and bismuth were compared. Fig. 4 shows the structures of the regenerators. Both lead and bismuth having a grain size of 0. 4mm to 0.5mm were used. For bismuth, spherical powder having a non-oxidized surface was sieved and used. Although the filling amount of lead was different from that of bismuth, filling volume is uniform herein, and the experiment was performed.

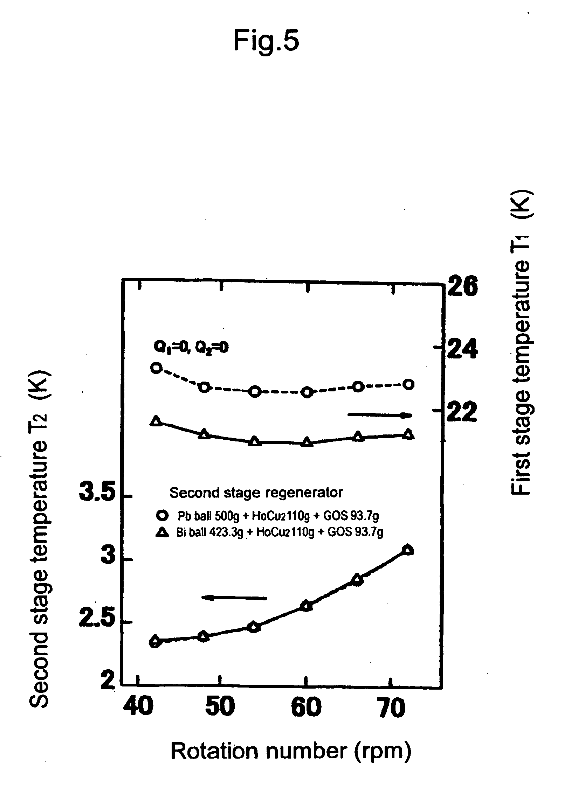

Fig. 5 shows the rotationnumber-dependent properties of the lowest temperature. The second stage temperature T₂ of bismuth is almost the same as that of lead. However, the first stage temperature T₁ of bismuth (Δ mark) is lower by about 2K than that of lead (ο mark) in the whole rotation number range.

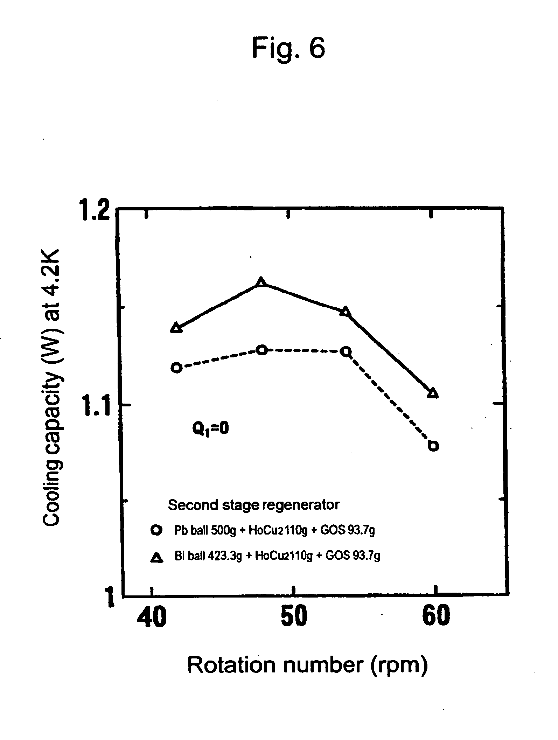

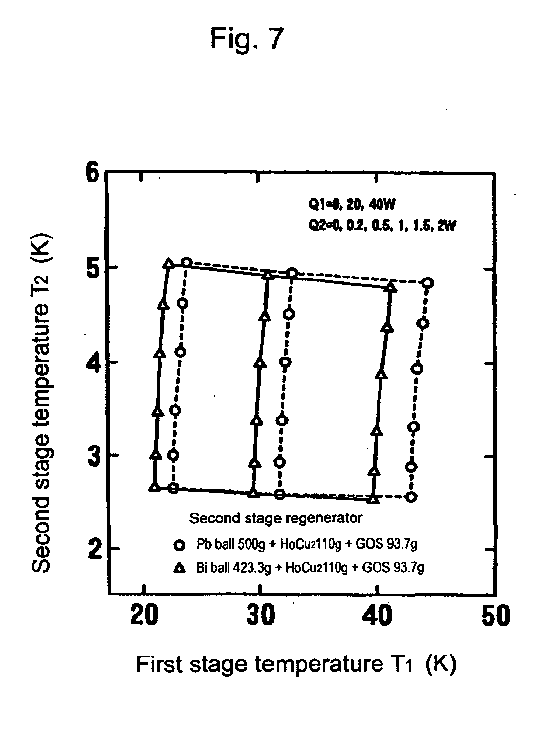

Fig. 6 shows the rotation number-dependent properties of second stage cooling capacity during first stage no-load. At any tested rotation numbers, bismuth (Δ mark) exhibits higher cooling capacity than that of lead (o mark). The highest cooling capacity was obtained at 48 rpm. Fig. 7 shows the cooling capacity diagram at 60 rpm. As shown in Fig. 5, the first stage temperature of bismuth was lower than that of lead. The result shows that bismuth (Δ mark) shows a lower temperature than that of lead (o mark) even when load is applied to the first stage.

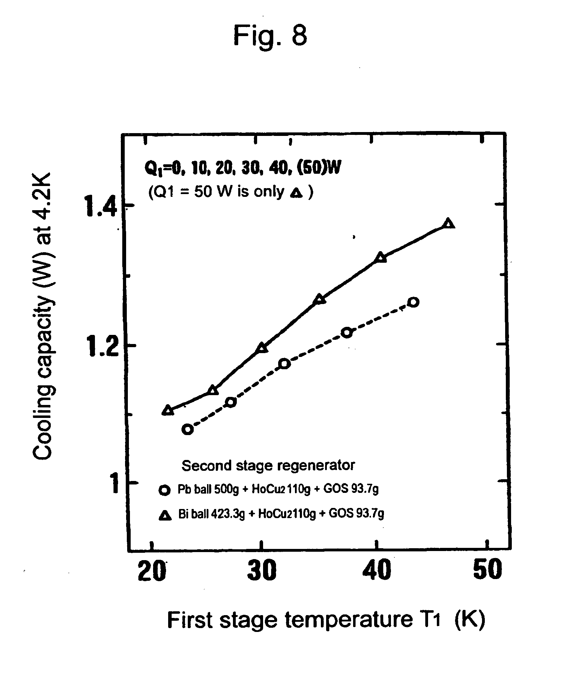

Fig. 8 shows the comparison of the second stage cooling capacity when applying load to the first stage. At any first stage temperatures, bismuth (Δ mark) has higher cooling capacity than that of lead (o mark) . The higher the first stage temperature is, the larger the difference is. A large difference of about 10% in the second stage cooling capacity at 4.2K is observed at about 45K.

Next, the difference in the cooling capacities caused by the difference in the surface states and grain sizes was evaluated. Bismuth balls were sieved by 0.1mm. Table 2 shows the evaluated classification. The low temperature side was filled with HoCu₂ 110g + GOS 93.7g as in Fig. 4 (B).

**[Table 2]**

| | A lot (surface deoxidization) | | B lot (surface oxidization) | | |
|---|---|---|---|---|---|
| Grain size (mm) | 0.3-0.4 | 0.4-0.5 | 0.4-0.5 | 0.5-0.6 | 0.6-0.7 |
| Filling amount (g) | 421.8 | 423.3 | 424.4 | 424.3 | 422.7 |

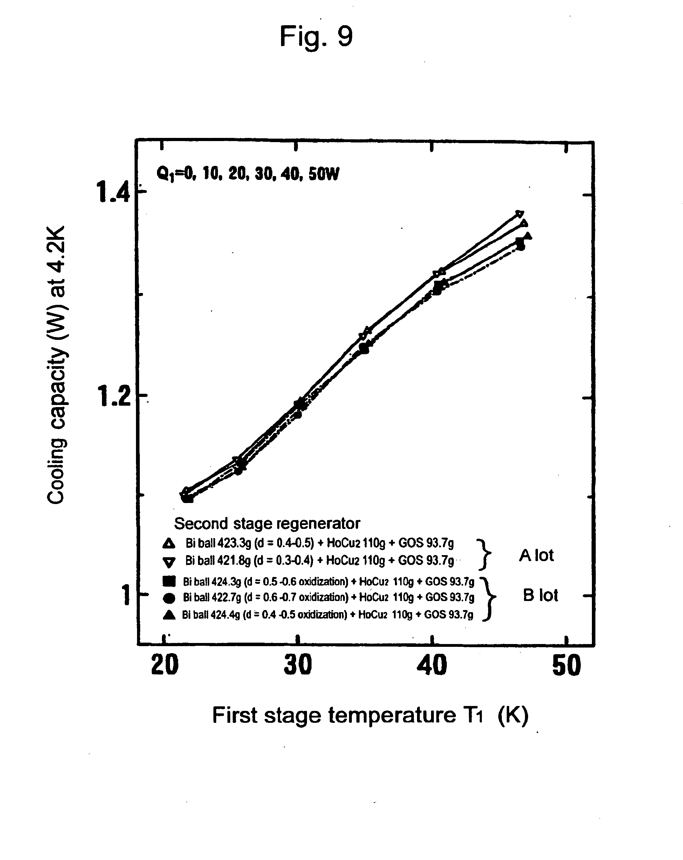

Fig. 9 shows the first stage temperature-dependent properties of the second stage cooling capacity using the conditions of bismuth as the parameter. Black points correspond to B lot, and white points correspond to A lot. Compared with the difference caused by the grain size in the same lot, the difference between lots is larger. In particular, it is understood that the difference between lots is larger in the range where the first stage temperature T₁ is higher than 40K.

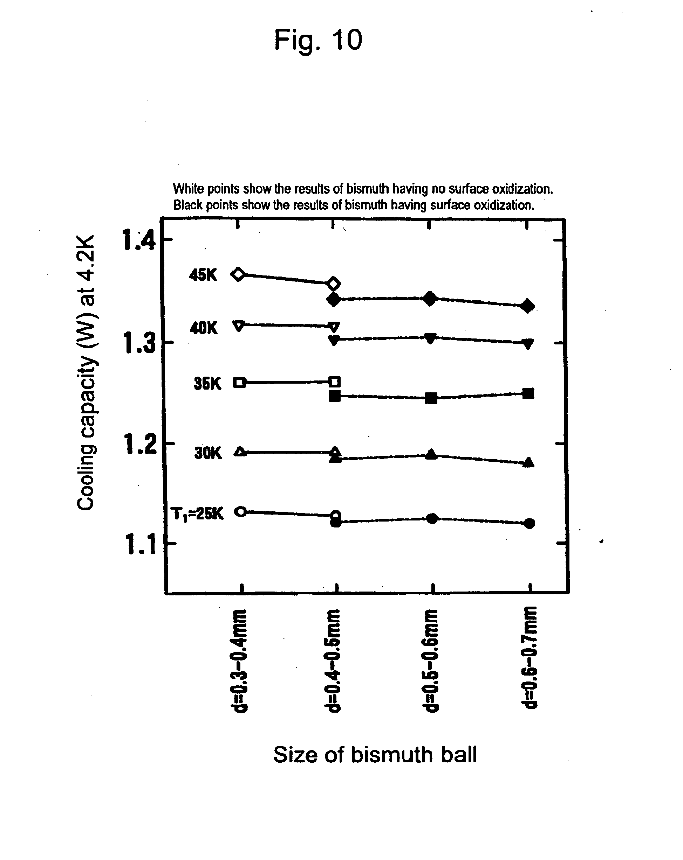

Fig. 10 shows the difference in the second stage cooling capacities according to the grain size of bismuth. The first stage temperature T₁ is expressed by 5K from 25K to 45K. Black points correspond to B lot, and white points corresponds to A lot. When the grain size is 0.4mm to 0.5mm, the difference between lots can be compared. However, it is understood that the higher the first stage temperature, the larger the difference is. On the other hand, little difference in the cooling capacities due to the grain size in the same lot can be observed.

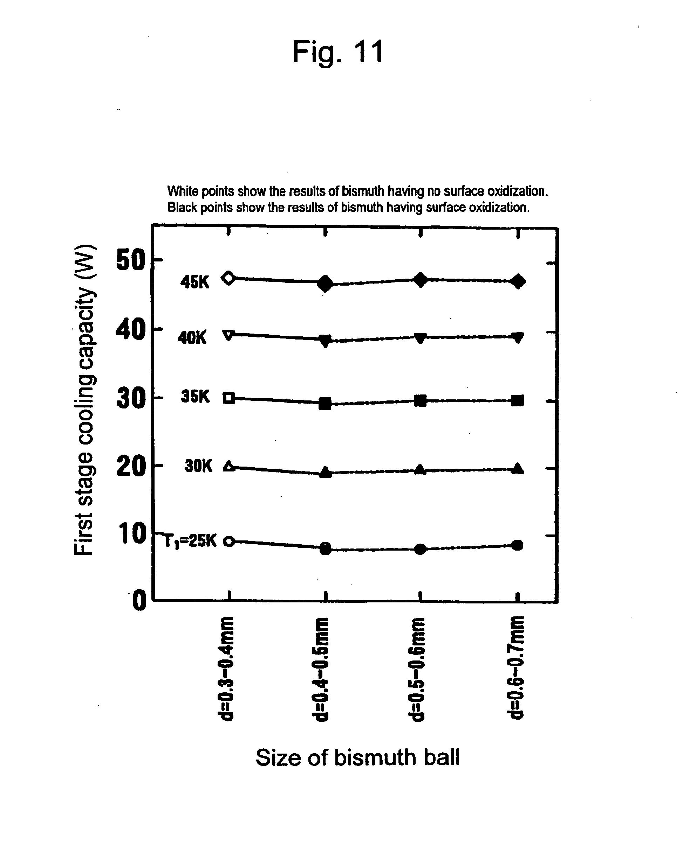

Although the case of the first stage cooling capacity is shown in Fig. 11, no practical difference between lots can be observed. This is in contrast with clear grain size-dependent properties being observed in the case of lead.

These results consider that the cooling capacity is not influenced by the grain size of bismuth in the evaluated range. If the reliability or the like poses no problem and the grain size range to be used is wide, the purchase unit price can be reduced. On the other hand, the cryocooler performance may be influenced by the oxidation state of the surface. Table 3 shows the results obtained by investigating the difference in the cooling capacities at 4.2K due to the oxidation state of the surface.

**[Table 3]**

| | | | | | |
|---|---|---|---|---|---|
| First stage temperature | 25K | 30K | 35K | 40K | 47K |
| Surface nonoxidative bismuth | 1.134 | 1.195 | 1.265 | 1.324 | 1.371 |
| Surface oxidative bismuth | 1.095 | 1.128 | 1.189 | 1.252 | 1.313 |

As a result of evaluating bismuth as the cold accumulating material replaced with lead, it was shown that bismuth for 4K cryocoolers had superior performance to that of lead. Since the grain size range of bismuth may be able to be enlarged, the price thereof may also be able to be reduced compared with that of lead. However, when the surface is oxidized, the performance may be reduced.

In order to actually use bismuth, not only the cooling capacity but also the material strength are important. However, the hardness test and the compression test showed that bismuth had higher hardness and strength than that of lead. From the above, bismuth may be able to be sufficiently used in place of lead.

### [Example 2]

Next, bismuth properties in a temperature range of 10K or more by a 4.2K refrigerator having cooling capacity of 0.5 W was evaluated.

In the above, the experimental results obtained by focusing attention on the effects of bismuth in the 4K range were described. However, there is also a range of 10K or more of the Cryopump or the like in addition to 4K as an application of a GM cryocooler. In this temperature range, conventionally lead has been entirely used as the regenerator material. When lead has been entirely changed to bismuth, the cooling capacity has been reduced by 30% or more in a temperature range of 10K or more. Therefore, indispensable lead-free causes insufficient cooling capacity, and thereby the insufficient cooling capacity may not be able to be solved by entirely replacing lead with bismuth. Then, an experiment for finding the measures which attain the cooling capacity equivalent to that of lead using bismuth was conducted.

As one of the measures, a hybrid of bismuth and other regenerator materials canbe considered. Then, a material having excellent specific heat characteristics at about 15K was selected and evaluated from the regenerator materials tried until now. First, HoCu₂ used at 4K and Er_{0.7}Ho_{0.3}Ni having a specific heat peak at 15K were evaluated. As shown in Fig. 3, Er_{0.7}Ho_{0.3}Ni has a large specific heat peak in the vicinity of 15K. Since GOS has an extremely reduced specific heat at a temperature or more which is the specific heat peak in the vicinity of 5K, GOS was out of the target of evaluation.

The used cryocooler is a 4.2K cryocooler having a cooling capacity of 0.5W. Referring to the cylinder size, the inner diameter of the first stage is 52mm; the length thereof is 191.5mm; the inner diameter of the second stage is 25mm; and the length thereof is 165mm. Also, the stroke is 25mm; the filling pressure is 19 kgf/cm²G; and the rotation number of a displacer motor is 60 rpm. The first stage regenerator is filled with 900 layers of copper screen of 150 mesh. The operation frequency of a compressor was 50Hz.

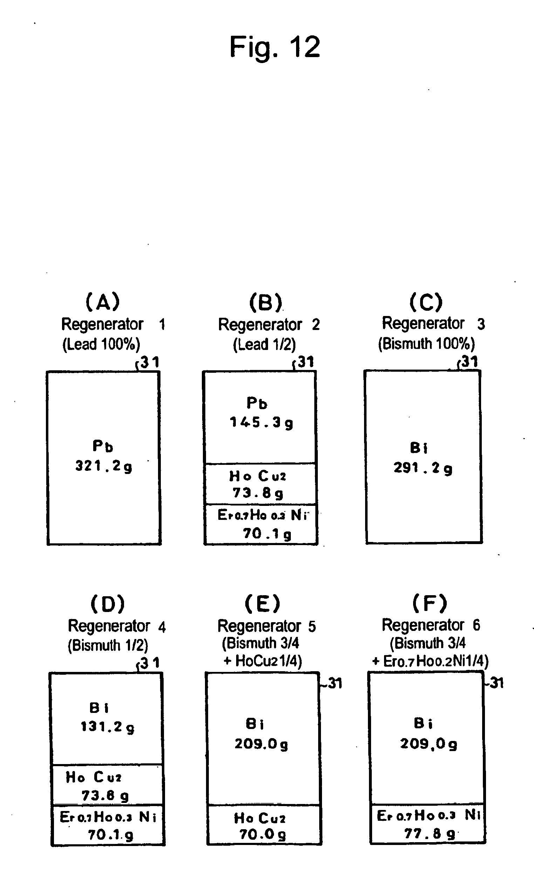

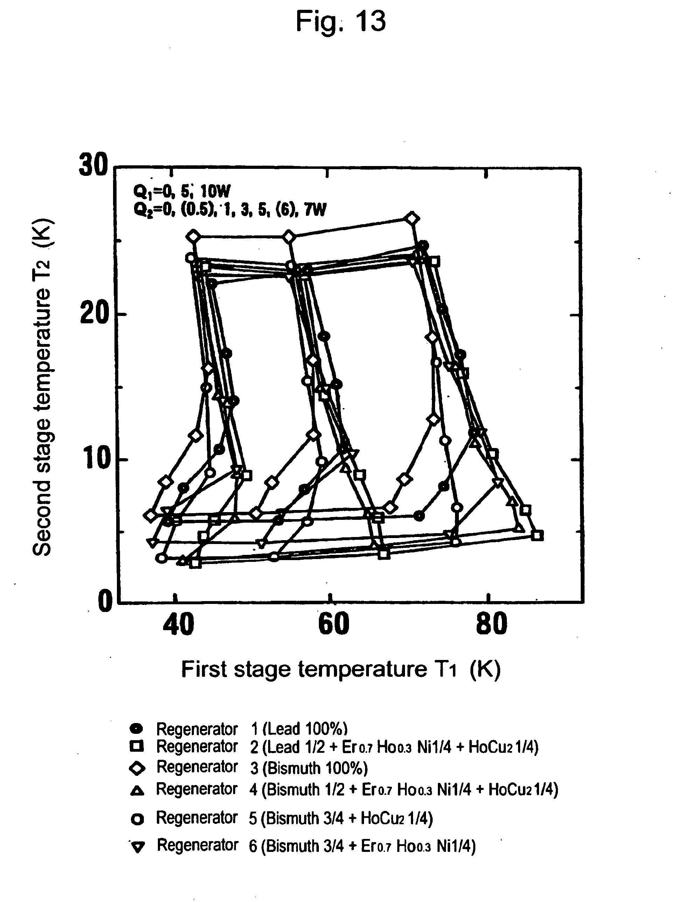

Fig. 12 shows the structures of the regenerators compared in this Example. Fig. 13 shows the difference in the cooling capacities due to the difference in the structures of the regenerators.

The lowest attainment temperature of the second stage was 4K or less only when the regenerator is filled with HoCu₂. The lowest temperature is 2.78K in the case of the regenerator 2. There is a large difference from the temperature of 6.14K in the case of the regenerator 3 entirely made of bismuth. On the other hand, the lowest temperature was attained in the first stage when the regenerator 3 was entirely made of bismuth.

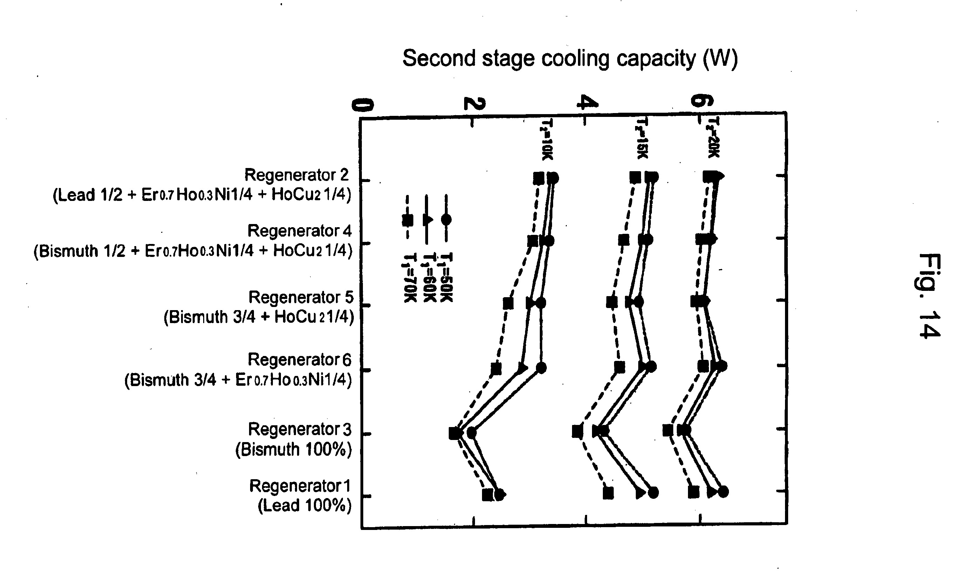

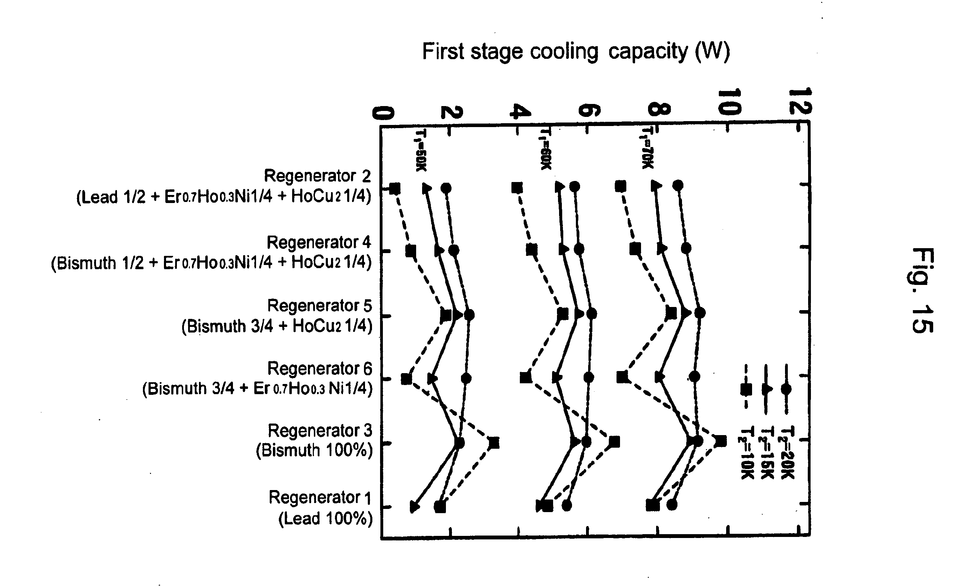

In order to compare the cooling capacities, the cooling capacities are calculated and compared in the case of second stage temperatures 10K, 15K, 20K and first stage temperatures 50K, 60K, 70K by an interpolating method from the cooling capacity diagram. Fig. 14 shows second stage cooling capacity, and Fig. 15 shows first stage cooling capacity.

When the second stage cooling capacity shown in Fig. 14 is reduced compared with lead (regenerator 1) in the case of being entirely made of bismuth (regenerator 3), the low temperature side 1/4 of bismuth is replaced with HoCu₂ (regenerator 5) or Er_{0.7}Ho_{0.3}Ni (regenerator 6), and thereby it is understood that the second stage cooling capacity is mostly recovered to that of lead.

On the other hand, the first stage cooling capacity shown in Fig. 15 is enhanced by bismuth. That is, when the second stage temperature T₂ is a low temperature in the vicinity of 10K in the case of being entirely made of bismuth (regenerator 3), the value of the first stage cooling capacity is particularly large. However, the second stage temperature gives large effects to the first stage cooling capacity. When the second stage temperature is high at 20K, the first stage cooling capacity is equivalent to or inferior to that of the hybrid regenerator. Comprehensively, as the structure of the regenerator replaced with lead, the combination of bismuth and HoCu₂ is superior.

As described above, the regenerator material made of bismuth of this embodiment is superior in the point of being more environmentally friendly compared with lead. In addition, the regenerator material can be utilized as the regenerator material better than the conventional one made of lead by a combination of the regenerator material made of bismuth and magnetic regenerator material such as HoCu₂ and Gd₂O₂S or regenerator material of another kind.

The magnetic regenerator material used together with HoCu₂ is not limited to the Gd₂O₂S. Examples of the magnetic regenerator materials include GAP (GdAlO₃) and one represented by the general formula RxO₂S or (R1-yR'y)xO₂S (R, R' are at least one kind of rare earth elements, 0.1 ≤ x ≤ 9, 0 ≤ y ≤1). In this case, the elements R and R' may be yttrium Y, lanthanum La, cerium Ce, praseodymium Pr, neodymium Nd, promethium Pm, samarium Sm, europium Eu, gadolinium Gd, terbium Tb, disprosium Dy, holmium Ho, erbium Er, thulium Tm or ytterbium Yb. Er₃Co can also be used in place of Er₃Ni.

Also, the above embodiment showed the case where the regenerator material is made of only granular bismuth (fine particle). However, the regenerator material of the present invention is not limited to only bismuth, and may be an alloy which contains bismuth as a main component. Examples of alloy components include antimony (Sb). This may be contained, for example, to about 5% to 10%. There is also an advantage that the hardness can be enhanced by producing such an alloy.

The granular regenerator material which is made of bismuth or an alloy containing bismuth as a main component may be manufactured by a melted metal quenching method which quenches melted metal simultaneously with granulation using a rotating disk, a roll, a rotation nozzle or the like. Also, the regenerator material may be manufactured by any process such as a plasma spray method and a gas atomizing method.

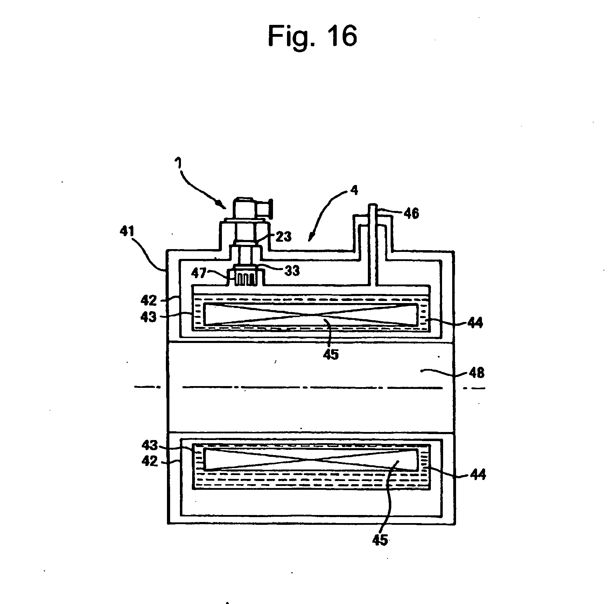

Next, Fig. 16 shows a second embodiment of the present invention which is an MRI apparatus using a two stage type GM cryocooler of the first embodiment.

In anMRI apparatus 4 of this embodiment, a superconducting magnet 45 is used in order to produce a magnetic field space 48. This superconducting magnet 45 is immersed in liquid helium 44, and is cooled to the superconducting state. A heat shield 42 is provided outside a liquid helium container 43, and a vacuum vessel 41 is further provided outside. Although the liquid helium is supplied from an inlet 46, the vaporized helium is again returned to liquid by a condensing part 47 provided in the liquid helium container 43. The MRI apparatus 4 can be operated without supplying helium for a long period of time.

The condensing part 47 is thermally combined with the second stage cooling stage 33 of the GM cryocooler 1, and thereby cold is continuously supplied. The heat shield 42 is cooled by the first cooling stage 23 of the GM cryocooler 1.

In this embodiment, since the cooling capacity of the GM cryocooler 1 is enhanced by the regenerator material according to the present invention, the liquid helium 44 can be more efficiently re-condensed, and the embodiment can also correspond to the MRI apparatus having a larger evaporation amount of helium.

Although the cryocooler 1 was used for re-condensing the liquid helium 44 in this embodiment, the cryocooler 1 can cool the superconducting magnet 45 directly using heat conduction without using the liquidhelium. The heat shield canbe added to constitute a so-called shield cooling type in which the first stage cooling stage 23 and the second cooling stage 33 cool a different heat shield respectively.

In the above embodiments, the present invention was applied to the GM cycle cryocooler. However, the object for application of the present invention is not limited thereto, and can be apparently applied to other regenerative cryocoolers such as a pulse tube cryocooler, a Joule Thompson cryocooler, a Stirling cycle cryocooler, a Vuilleuwier cycle cryocooler and a Solvay cycle cryocooler.

Asystemusing the regenerative cryocooler according to the present invention is not limited to the MRI apparatus of the second embodiment, and can be obviously applied to an NMR apparatus, a superconducting magnet apparatus, a Cryopump, a Josephson voltage standard apparatus, a freezing mediumpurifying apparatus, a superconducting device cooling apparatus, a helium re-condensation apparatus or the like similarly.

The shape of the regenerator material is not limited to the granular body. The regenerator material may be sintered and processed into a block form, a pellet form or a plate form, and filled with the regenerator. Or the regenerator material may have a mesh-shape having a mesh opening of 0.01mm to 1mm. The regenerator material may be coated or plated on the surface of a metal mesh having a mesh opening of 0.01mm to 1mm.

### INDUSTRIAL APPLICABILITY

As described above, the present invention can provide the regenerator material made of material friendly to the environment and having superior performance. Also, the present invention can provide the regenerator filled with the regenerator material, and the cryocooler provided with the regenerator. Furthermore, the present invention can provide various systems using the cryocooler.

## Claims

1. A regenerator material comprising a granular body made of bismuth or an alloy of bismuth and antimony, wherein a rate of the granular body having a grain size of 0.14mm to 1.6mm is 70% by weight or more with respect to the entire granular body, and a rate of the granular body in which a ratio of a major axis to a minor axis is 5 or less is 70% by weight or more with respect to the entire granular body.

2. The regenerator material according to claim 1, wherein a surface roughness of the granular body in terms of maximum height Rₘₐₓ is 100 µm or less.

3. The regenerator material according to claim 1 or 2, wherein at least a part of a structure of the granular body contains an amorphous phase.

4. The regenerator material according to any of claims 1 to 3, wherein a rate of particles having a minute defect having a length of 10 µm or more to all particles in the granular body is 30% by weight or less.

5. The regenerator material according to any of claims 1 to 4, wherein a surface of the granular body has no discoloration caused by oxidization.

6. The regenerator material according to any of claims 1 to 5, wherein the granular body made of bismuth or an alloy of bismuth and antimony is sintered and processed into a block form, a pellet form or a plate form.

7. A regenerator filled with the regenerator material according to any of claims 1 to 6.

8. The regenerator according to claim 7, having a laminated structure of two or more layers comprising the regenerator material according to any of claims 1 to 9 and a magnetic regenerator material.

9. The regenerator according to claim 8, wherein the magnetic regenerator material is HoCu₂.

10. The regenerator according to claim 8, wherein the magnetic regenerator material is HoCu₂ and Gd₂O₂S, or GAP (GdAlO₃).

11. The regenerator according to claim 8, wherein the magnetic regenerator material is Er₃Ni or Er₃Co.

12. The regenerator according to claim 8,wherein the magnetic regenerator material is Er₃Ni or Er₃Co, and Gd₂O₂S or GAP (GdAlO₃).

13. A cryogenic regenerative cryocooler comprising the regenerator according to any of claims 7 to 12.

14. The cryogenic regenerator cryocooler according to claim 13, wherein the regenerator is used for a lowest temperature cooling stage.

15. The cryogenic regenerator cryocooler according to claim 13, wherein the regenerator is used for a middle cooling stage, and another magnetic material having a large volumetric specific heat at 4K or lower is used for a last cooling stage regenerator.

16. A refrigerating system comprising:
a precooling stage using the cryocooler according to any of claims 13 to 15; and
at least one other cooling means.

17. A superconducting magnet comprising the cryocooler according to any of claims 13 to 15 or the refrigerating system according to claim 16.

18. A magnetic resonance imaging apparatus comprising the cryocooler according to any of claims 13 to 15 or the refrigerating system according to claim 16.

19. A cryopump comprising the cryocooler according to any of claims 13 to 15 or the refrigerating system according to claim 16.

20. A cryogenic gas purifying apparatus comprising the cryocooler according to any of claims 13 to 15 or the refrigerating system according to claim 16.

21. A superconducting device cooling apparatus comprising the cryocooler according to any of claims 13 to 15 or refrigerating system according to claim 16.

## Patentansprüche

1. Regeneratormaterial, das einen körnigen bzw. granularen Körper aufweist, der aus Bismut oder einer Legierung aus Bismut und Antimon besteht, wobei ein Anteil des granularen Körpers mit einer Korngröße von 0,14 mm bis 1,6 mm 70 Gewichtsprozent oder mehr in Bezug auf den gesamten granularen Körper ausmacht, und ein Anteil des granularen Körpers, in dem ein Verhältnis einer Hauptachse zu einer Nebenachse 5 oder weniger beträgt, 70 Gewichtsprozent oder mehr in Bezug auf den gesamten granularen Körper ausmacht.

2. Regeneratormaterial gemäß Anspruch 1, wobei eine Oberflächenrauhigkeit des granularen Körpers im Hinblick auf die maximale Höhe Rₘₐₓ 100 µm oder weniger beträgt.

3. Regeneratormaterial gemäß Anspruch 1 oder 2, wobei zumindest ein Teil eines Aufbaus des granularen Körpers eine amorphe Phase aufweist.

4. Regeneratormaterial gemäß Anspruch 1 bis 3, wobei ein Anteil der Partikel, der einen winzigen Defekt mit einer Länge von 10 µm oder mehr aufweist an sämtlichen Partikeln in dem granularen Körper 30 Gewichtsprozent oder weniger beträgt.

5. Regeneratormaterial gemäß Anspruch 1 bis 4, wobei eine Oberfläche des granularen Körpers keine Verfärbung aufweist, die durch Oxidation verursacht wird.

6. Regeneratormaterial gemäß Anspruch 1 bis 5, wobei der granulare Körper, der aus Bismut oder einer Legierung aus Bismut und Antimon besteht, gesintert und in eine Blockform, eine Pelletform oder eine Plattenform verarbeitet wird.

7. Regenerator, der mit dem Regeneratormaterial gemäß einem der Ansprüche 1 bis 6 gefüllt ist.

8. Regenerator gemäß Anspruch 7, der einen laminierten Aufbau von zwei oder mehr Schichten aufweist, die das Regeneratormaterial gemäß einem der Ansprüche 1 bis 9 und ein magnetisches Regeneratormaterial aufweisen.

9. Regenerator gemäß Anspruch 8, wobei das magnetische Regeneratormaterial HoCu₂ ist.

10. Regenerator gemäß Anspruch 8, wobei das magnetische Regeneratormaterial HoCu₂ und Gd₂O₂S oder GAP (GdAlO₃) ist.

11. Regenerator gemäß Anspruch 8, wobei das magnetische Regeneratormaterial Er₃Ni oder Er₃Co ist.

12. Regenerator gemäß Anspruch 8, wobei das magnetische Regeneratormaterial Er₃Ni oder Er₃CO und Gd₂O₂S oder GAP (GdAlO₃) ist.

13. Kryogene, regenerative Tiefkühlvorrichtung, die den Regenerator gemäß einem der Ansprüche 7 bis 12 aufweist.

14. Kryogene Regenerator-Tiefkühlvorrichtung gemäß Anspruch 13, wobei der Regenerator für eine Kühlstufe niedrigster Temperaturen verwendet wird.

15. Kryogene Regenerator-Tiefkühlvorrichtung gemäß Anspruch 13, wobei der Regenerator für eine mittlere Kühlstufe verwendet wird, und ein weiteres magnetisches Material mit einer großen volumetrischen, spezifischen Wärmekapazität bei 4K oder weniger für einen Regenerator der letzten Kühlstufe verwendet wird.

16. Kühlsystem, das Folgendes aufweist:
eine Vorkühlstufe, die die Tiefkühlvorrichtung gemäß einem der Ansprüche 13 bis 15 verwendet; und
zumindest ein anderes Kühlmittel.

17. Supraleitender Magnet, der die Tiefkühlvorrichtung gemäß einem der Ansprüche 13 bis 15 oder das Kühlsystem gemäß Anspruch 16 aufweist.

18. Magnetresonanzbildgebungsvorrichtung, die die Tiefkühlvorrichtung gemäß einem der Ansprüche 13 bis 15 oder das Kühlsystem gemäß Anspruch 16 aufweist.

19. Kryopumpe, die die Tiefkühlvorrichtung gemäß einem der Ansprüche 13 bis 15 oder das Kühlsystem gemäß Anspruch 16 aufweist.

20. Reinigungsvorrichtung für Tieftemperaturgas, die die Tiefkühlvorrichtung gemäß einem der Ansprüche 13 bis 15 oder das Kühlsystem gemäß Anspruch 16 aufweist.

21. Kühlvorrichtung für eine supraleitende Vorrichtung, die die Tiefkühlvorrichtung gemäß einem der Ansprüche 13 bis 15 oder das Kühlsystem gemäß Anspruch 16 aufweist.

## Revendications

1. Matériau régénérateur comprenant un corps granulaire en bismuth ou en un alliage de bismuth et d'antimoine, dans lequel la proportion du corps granulaire ayant une taille de grain de 0,14 mm à 1,6 mm est supérieure ou égale à 70 % en poids, par rapport au corps granulaire complet, et la proportion du corps granulaire dans laquelle le rapport entre l'axe majeur et l'axe mineur est inférieur ou égal à 5 est supérieure ou égale à 70 % en poids, par rapport au corps granulaire entier.

2. Matériau régénérateur selon la revendication 1, dans lequel la rugosité de surface du corps granulaire en termes de hauteur maximum Rₘₐₓ est inférieure ou égale à 100 µm.

3. Matériau régénérateur selon la revendication 1 ou 2, dans lequel au moins une partie de la structure du corps granulaire contient une phase amorphe.

4. Matériau régénérateur selon l'une quelconque des revendications 1 à 3, dans lequel la proportion de particules ayant un défaut minuscule avec une longueur de 10 µm ou plus, par rapport à la totalité des particules dans le corps granulaire, est inférieure ou égale à 30 % en poids.

5. Matériau régénérateur selon l'une quelconque des revendications 1 à 4, dans lequel la surface du corps granulaire ne présente pas de décoloration provoquée par l'oxydation.

6. Matériau régénérateur selon l'une quelconque des revendications 1 à 5, dans lequel le corps granulaire fait de bismuth ou d'un alliage de bismuth et d'antimoine est fritté et traité pour obtenir une forme de bloc, une forme de granulés ou une forme de plaque.

7. Régénérateur rempli du matériau régénérateur selon l'une quelconque des revendications 1 à 6.

8. Régénérateur selon la revendication 7, ayant une structure stratifiée de deux ou plusieurs couches comprenant le matériau régénérateur selon l'une quelconque des revendications 1 à 9 et un matériau régénérateur magnétique.

9. Régénérateur selon la revendication 8, dans lequel le matériau régénérateur magnétique est HoCu₂.

10. Régénérateur selon la revendication 8, dans lequel le matériau régénérateur magnétique est HoCu₂ et Gd₂O₂S, ou GAP (GdAlO₃).

11. Régénérateur selon la revendication 8, dans lequel le matériau régénérateur magnétique est Er₃Ni ou Er₃Co.

12. Régénérateur selon la revendication 8, dans lequel le matériau régénérateur magnétique est Er₃Ni ou Er₃Co, et Gd₂O₂S ou GAP (GdAlO₃).

13. Cryoréfrigérateur à régénération cryogénique comprenant le régénérateur de l'une quelconque des revendications 7 à 12.

14. Cryoréfrigérateur à régénération cryogénique selon la revendication 13, dans lequel le régénérateur est utilisé pour l'étage de refroidissement de la température la plus basse.

15. Cryoréfrigérateur à régénération cryogénique selon la revendication 13, dans lequel le régénérateur est utilisé pour un étage de refroidissement intermédiaire, et un autre matériau magnétique ayant une chaleur massique spécifique élevée à 4 °K ou moins est utilisé comme régénérateur du dernier étage de refroidissement.

16. Système réfrigérant comprenant :
un étage de pré-refroidissement utilisant le cryoréfrigérateur selon l'une quelconque des revendications 13 à 15 ; et
au moins un autre moyen de refroidissement.

17. Élément supraconducteur comprenant le cryoréfrigérateur selon l'une quelconque des revendications 13 à 15 ou le système réfrigérant selon la revendication 16.

18. Appareil d'imagerie par résonance magnétique comprenant le cryoréfrigérateur selon l'une quelconque des revendications 13 à 15 ou le système réfrigérant selon la revendication 16.

19. Pompe cryogénique comprenant le cryoréfrigérateur selon l'une quelconque des revendications 13 à 15 ou le système réfrigérant selon la revendication 16.

20. Appareil de purification de gaz cryogénique comprenant le cryoréfrigérateur selon l'une quelconque des revendications 13 à 15 ou le système réfrigérant selon la revendication 16.

21. Appareil de refroidissement de dispositif supraconducteur comprenant le cryoréfrigérateur selon l'une quelconque des revendications 13 à 15, ou le système réfrigérant selon la revendication 16.
